# EUROPÄISCHE PATENTSCHRIFT

(11) **EP 1 311 003 B1**
(45) Veröffentlichungstag und Bekanntmachung des Hinweises auf die Patenterteilung: **14.11.2007**
(21) Anmeldenummer: 02021149.6
(22) Anmeldetag: 24.09.2002
(51) Int. Cl.: H01L 41/04

(54) **Verfahren zum Laden und Entladen eines piezoelektrischen Elements**
Method of charging and discharging a piezoelectric element
Méthode de chargement et déchargement d'un élément piézoélectrique

(30) Priorität: 10.11.2001 DE 10155391
(43) Veröffentlichungstag der Anmeldung: 14.05.2003
(73) Patentinhaber: ROBERT BOSCH GMBH, 70442 Stuttgart (DE)
(72) Erfinder: Rueger, Johannes-Joerg, 1130 Wien (AT); Schulz, Udo, 71665 Vaihingen/Enz (DE)

(56) Entgegenhaltungen:
- DE-A1- 19 858 250
- DE-A1- 19 858 286
- DE-A1- 19 944 733
- DE-C- 10 002 270

## Beschreibung

Die Erfindung betrifft ein Verfahren zum Laden und Entladen eines piezoelektrischen Elementes mit den im Oberbegriff des Anspruchs 1 genannten Merkmalen.

### Stand der Technik

Piezoelektrische Elemente haben bekanntermaßen die Eigenschaft, sich in Abhängigkeit von einer an sie angelegten oder einer sich an ihnen einstellenden Gleichspannung zusammenzuziehen oder auszudehnen. Die praktische Realisierung von Stellgliedern durch piezoelektrische Elemente ist insbesondere dann geeignet, wenn das betreffende Stellglied schnelle und/ oder häufige Bewegungen auszuführen hat. Das piezoelektrische Element kommt unter anderem bei Kraftstoffeinspritzdüsen für Brennkraftmaschinen zum Einsatz. Für bestimmte Anwendungsfälle ist es erforderlich, beispielsweise wenn das piezoelektrische Element als Aktor in einem Kraftstoffeinspritzsystem verwendet wird, dass das piezoelektrische Element möglichst genau auf verschiedene, gegebenenfalls auf Variierende Ausdehnungen gebracht werden kann. Dabei entsprechen verschiedene Ausdehnungen des Piezoelementes durch eine direkte oder indirekte Übertragung auf ein Steuerventil der Verlagerung eines Stellgliedes, wie beispielsweise einer Düsennadel. Die Verlagerung der Düsennadel hat die Freigabe von Einspritzlöchern zur Folge. Die Dauer der Freigabe der Einspritzlöcher entspricht, in Abhängigkeit eines freien Querschnitts der Löcher und eines anliegenden Druckes, einer gewünschten Einspritzmenge. Dabei wird die Übertragung der Ausdehnung des piezoelektrischen Elementes auf das Steuerventil in zwei grundlegende Übertragungsarten unterschieden. In der ersten, direkten Übertragungsart wird die Düsennadel, direkt vom piezoelektrischen Element, über einen hydraulischen Koppler bewegt. In der zweiten Übertragungsart wird die Bewegung der Düsennadel durch ein Steuerventil gesteuert, das über einen hydraulischen Koppler, vom piezoelektrischen Element ausgehend, angesteuert wird. Die zweite, indirekte Übertragungsart entspricht dem praktischen Hauptanwendungsfall und ist Grundlage der weiteren Erläuterungen. Der hydraulische Koppler hat im Wesentlichen zwei Eigenschaften, erstens die Verstärkung des Hubes des piezoelektrischen Elementes und zweitens die Entkoppelung des Steuerventils von einer statischen Temperaturdehnung des piezoelektrischen Elementes. Der hydraulische Koppler überträgt die elastische Auslenkung des piezoelektrischen Elementes innerhalb eines Ansteuerzyklus auf das Steuerventil. Für die korrekte Funktion des Kopplers muss dieser ausreichend mit einem Fluid befüllt sein. Bei jedem Ansteuerungszyklus, der aus einem Ladevorgang, einem Haltevorgang sowie einem Entladevorgang besteht, wird ein Teil des im Koppler befindlichen Fluids über Leckspalten aus diesem herausgedrückt. Ein solches Verfahren ist aus der DE-C-100 02 270 bekannt.

Die DE-A-19 944 733 zeigt ein Verfahren zum Laden und Entladen eines piezoelektrischen Elements. Elektrische Ladungsträger werden von einer Gleichspannungsquelle zum piezoelektrischen Element oder umgekehrt transportiert. Die Stellbewegung des Stellgliedes wird in Abhängigkeit von der Höhe einer am piezoelektrischen Element anliegenden Spannung verändert. Bei dieser Einrichtung tritt die Problematik auf, dass während einer Haltephase aufgrund der Selbstentladung durch parasitäre Widerstände die Ausdehnung des piezoelektrischen Elements ändert und damit ebenfalls zu einer ungewollten Veränderung der Position der Ventilnadel auftritt. Dieser Spannungsabfall, aufgrund des Abflusses von Ladungsträgern wird durch eine zusätzliche Übertragung von Ladungsträgern kompensiert.

Im Besonderen während des Lade- und Haltevorganges, bei dem das piezoelektrische Element auf eine gewisse Spannung aufgeladen wird, erfährt der hydraulische Koppler eine gewisse Auslenkung und bewegt ein Ventilelement des Steuerventils von einem ersten in einen zweiten Sitz. Dabei muss für eine korrekte Öffnung der Düsennadel in der Regel das Ventilelement des Steuerventils am zweiten Sitz anliegen und gegen einen in einer Rail-Kammer anliegenden Hochdruck abdichten. Ist dies nicht der Fall, so kommt es wegen der Druckveränderungen eines Steuerraums oberhalb des Stellgliedes in der Regel zu einer ungewollten Auslenkung des Stellgliedes und damit zu einer ungenauen Einspritzmenge. Während des Haltevorganges kommt es durch vorhandene Leckageverluste an den Leckspalten des hydraulischen Kopplers zur Verringerung eines Kopplerdruckes, das heißt des Drucks im Koppler. Infolge der Verringerung des Kopplerdruckes geht rückwirkend die Höhe einer innerhalb des Ladevorganges angelegten Soll-Gleichspannung des piezoelektrischen Elementes zurück. Ist der Kopplerdruck auf ein gewisses Maß abgesunken, so kann das Ventilelement des Steuerventils nicht mehr im zweiten Sitz gehalten werden und es treten Undichtigkeiten im zweiten Sitz des Steuerventils auf. Besonders bei hohen Drücken in der Rail-Kammer kommt es somit nach kurzer Zeit zu Leckagen im Dichtbereich des zweiten Sitzes. Eine Druckänderung innerhalb des Steuerraums ist die Folge. Diese Druckänderung führt zu einer ungewollten Stellbewegung des Stellgliedes und daraus folgend zu einer ungenauen Einspritzmenge. Die Verringerung der am piezoelektrischen Element anliegenden Spannung in der Haltephase ist damit ein Indikator für das Dichthalten des Steuerventils am zweiten Sitz und damit für die korrekte Funktion des Injektors.

### Vorteile der Erfindung

Das erfindungsgemäße Verfahren mit den im Anspruch 1 genannten Merkmalen bietet gegenüber dem bisherigen Verfahren den Vorteil, dass durch die mindestens eine zusätzliche Übertragung von elektrischen Ladungsträgern von der Gleichspannungsquelle zum piezoelektrischen Element während einer Haltephase eine Verringerung des Drucks in dem Koppler kompensiert wird. Dies bedeutet diese Verfahrensweise führt zur Kompensation des Druckabfalls im Koppler durch erneute Übertragung

Vorteilhafte Ausgestaltungen der Erfindung ergeben sich aus den in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Darstellung des Verfahrens anhand eines Einspritzventils;
- Figur 2: ein Diagramm des Spannungsverlaufes eines Ansteuerungszyklus in Abhängigkeit von der Zeit;
- Figur 3: ein Diagramm der Einspritzmenge innerhalb eines Ansteuerungszyklus in Abhängigkeit von der Zeit und
- Figur 4: ein Diagramm des Spannungsverlaufes eines Ansteuerungszyklus in Abhängigkeit von der Zeit.

### Beschreibung des Ausführungsbeispiels

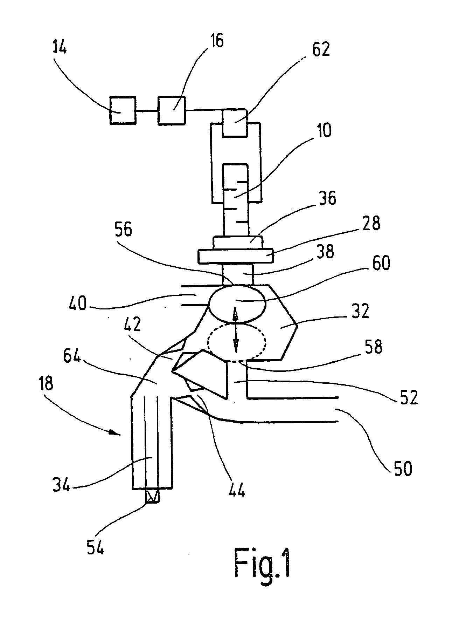

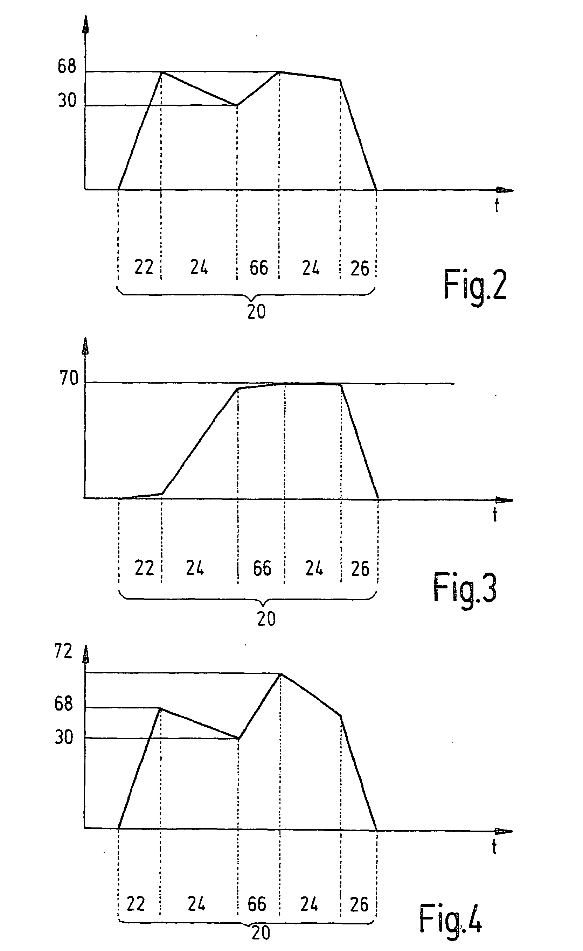

In Figur 1 wird das erfindungsgemäße Verfahren verdeutlicht. Eine Versorgungsspannung 14 speist eine Gleichspannungsquelle 16, die eine Lade- und Entladeeinheit 62 versorgt. Es werden elektrische Ladungsträger der Gleichspannungsquelle 16 zu einem piezoelektrischen Element 10 und zurück übertragen. Die Übertragung erfolgt innerhalb eines Ansteuerzyklus 20, der aus einem Ladevorgang 22, einem Haltevorgang 24 und einem Entladevorgang 26 gebildet wird (Figur 2). Beim Ladevorgang 22 und im Wesentlichen beim Haltevorgang 24 wird das piezoelektrische Element 10 mechanisch ausgelenkt. Die mechanische Auslenkung erfolgt durch das Anlegen einer vorbestimmten Gleichspannung 12 und erreicht am Ende des Ladevorganges 22 bei einer Soll-Gleichspannung 68 die vorbestimmte Auslenkung.

In Figur 2 ist der zugehörige Ladevorgang 22 in einem Spannungs/Zeit-Diagramm dargestellt.

Die maximale Auslenkung des piezoelektrischen Elementes 10 wird - wie in Figur 1 dargestellt - über einen Kolben 36 auf einen hydraulischen Koppler 28 übertragen. Vom hydraulischen Koppler 28 erfolgt die Übertragung auf einen Kolben 38 und nachfolgend auf ein Steuerventil 32. Zwischen dem Kolben 36 und dem hydraulischen Koppler 28 und dem Kolben 38 wird in jedem Ansteuerungszyklus 20 ein Teil des im hydraulischen Koppler 28 befindlichen Fluids über Leckspalten aus dem hydraulischen Koppler herausgedrückt.

Zunächst befindet sich ein Ventilelement 60 des Steuerventils 32 in einem ersten Sitz 56. Nach Ansteuerung des piezoelektrischen Elementes 10 und Übertragung der mechanischen Auslenkung des piezoelektrischen Elementes 10 über den Kolben 36, den hydraulischen Koppler 28 und den Kolben 38 wird das Ventilelement 60 aus dem ersten Sitz 56 in einen zweiten Sitz 58 verlagert. Dadurch wird ein Rail-Bypass 52 einer Rail-Kammer 50, die unter hohem Raildruck steht, verschlossen. Bei den weiteren Ausführungen wird davon ausgegangen, dass der Raildruck in der Rail-Kammer 50 konstant gehalten wird. Nachdem das Ventilelement 60 den zweiten Sitz 58 im Steuerventil 32 erreicht hat, beginnt innerhalb des Ansteuerzyklus 20 der Haltevorgang 24.

Gemäß Figur 1 strömt während des Haltevorganges 24 ein bereits im Innern des Steuerventils 32 und in einem Steuerraum 64 befindlicher flüssiger Kraftstoff über eine Zulauf-Drossel 44 zum Steuerraum 64. Vom Steuerraum 64 gelangt ein Teil des Kraftstoffes über eine Ablauf-Drossel 42 zu einem Rücklauf 40. Dadurch sinkt der Rail-Kammer abhängige Druck im Steuerraum 64 ab und ein Stellglied 18 öffnet. Die Öffnung des Stellgliedes 18 erfolgt durch die druckabhängige Auslenkung einer Düsennadel 34, wodurch Einspritzlöcher 54 freigegeben werden. Die Funktionsweise solcher druckabhängigen Einspritzventile ist hinreichend bekannt und wird hier nicht weiter ausgeführt.

In Figur 3 ist anhand eines Diagrammes, welches die Einspritzmenge 70 in Abhängigkeit von der Zeit darstellt, der Ladevorgang 22 und der anschließende Haltevorgang 24 dargestellt. Es ist erkennbar, dass - nach einer hydraulischen Verzögerung innerhalb des Ladevorganges, hervorgerufen durch die Trägheit des hydraulischen Kopplers 28 sowie der hydraulisch bewegten Düsennadel 34 - nach Ablauf des Ladevorganges 22 eine Einspritzmenge 70 insbesondere während des Haltevorganges 24 realisiert wird.

Gemäß Figur 2 kommt es während des Haltevorganges 24 zu einem Absinken der Soll-Gleichspannung 68 des piezoelektrischen Elementes 10, wenn der Kopplerdruck, hervorgerufen durch Leckageeffekte zwischen dem Kolben 36 und 38, absinkt. Durch den absinkenden Druck im Koppler wird das Ventilelement 60 nicht mehr sicher im zweiten Sitz 58 gehalten. Es kommt zunächst zu zusätzlichen Leckagen im Abdichtungsbereich zwischen dem Ventilelement 60 und dem Rail-Bybass 52.

Figur 2 zeigt anhand der Kennlinie den Gleichspannungsabfall der Soll-Gleichspannung 68 bis zur unteren Grenzspannung 30 innerhalb des Haltevorganges 24.

Figur 3 zeigt deutlich, dass die Einspritzmenge 70 vom Absinken der Soll-Gleichspannung 68 innerhalb des Haltevorganges 24 unbeeinflusst bleibt und gegebenenfalls weiter ansteigt, da der Abfall der Soll-Gleichspannung 68 bis zur unteren Grenzspannung 30 noch nicht zu einer Verlagerung des Ventilelementes 60 aus dem zweiten Sitz 58 führt.

Ein weiteres Absinken des Kopplerdruckes bis unterhalb der unteren Grenzspannung 30 während des Haltevorganges 24 führt zu einer Verlagerung des Ventilelementes 60 aus dem zweiten Sitz in Richtung des ersten Sitzes und zu einer Öffnung des Rail-Bypasses 52. Durch die Öffnung des Rail-Bypasses 52 wirkt der Raildruck der Rail-Kammer 50 über den geöffneten Rail-Bypass 52 auf der Rückseite der Ablauf-Drossel 42 und über die Zulauf-Drossel 44 zurück zur Zulauf-Drossel 44 auf der Vorderseite der Ablauf-Drossel 42. Durch diesen Vorgang steigt der Druck im Steuerraum 64 im Vergleich zum Zustand mit geschlossenem Rail-Bypass 52 an. Der Druckanstieg im Steuerraum 64 führt zu einer ungewollten Schließbewegung des Stellgliedes 18, insbesondere der Düsennadel 34. Demzufolge wird ein geringerer Querschnitt der Einspritzlöcher 54 freigegeben und die gewünschte Einspritzmenge 70 wird nicht erreicht.

Dieser Vorgang ist in den Figuren 1 bis 4 nicht dargestellt, da erfindungsgemäß - wie Figur 2 zeigt - bei Erreichen einer unteren Grenzspannung 30 ein Kompensationsvorgang 66 angeschlossen wird. Das während des Haltevorganges 24 von der Spannungsversorgung getrennte piezoelektrische Element 10 wird nach Rückgang der Soll-Gleichspannung 68 auf die untere Grenzspannung 30 erneut angesteuert und es kommt zu einer erneuten Übertragung von elektrischen Ladungsträgern der Gleichspannungsquelle 16 auf das piezoelektrische Element 10. Der Kompensationsvorgang 66 stellt damit sicher, dass das Ventilelement 60 weiterhin im zweiten Sitz 58 des Steuerventils 32 gehalten wird.

Erfindungsgemäß ist es weiterhin möglich, den Kompensationsvorgang 66 innerhalb des Haltevorganges 24 mehrmals zu wiederholen.

Das Verfahren ist nicht darauf beschränkt, innerhalb des Kompensationsvorganges 66 die Spannung von der unteren Grenzspannung 30 auf die Soll-Gleichspannung 68 zurückzuführen. Es besteht die Möglichkeit, unter Beibehaltung der bis dahin beschriebenen Verfahrensschritte (Ladevorgang 22 und Haltevorgang 24) die zurückgegangene Soll-Gleichspannung 68 auf ein Spannungsniveau 72, welches oberhalb der Soll-Gleichspannung 68 liegt, anzuheben. Dieser mögliche Verfahrensschritt wird anhand der Kennlinie innerhalb des Kompensationsvorganges 66 in Figur 4 dargestellt.

Dem Kompensationsvorgang 66 kann sich, wie Figur 1 und Figur 4 zeigen, ein weiterer Haltevorgang 24 anschließen, bei dem in Abhängigkeit von der Soll-Gleichspannung 68 laut Figur 2 oder dem Spannungsniveau 72 laut Figur 4 wiederum ein Spannungsabfall zu verzeichnen ist.

Wie Figur 3 verdeutlicht, bleibt die Einspritzmenge 70 während des sich dem Kompensationsvorgang 66 anschließenden Haltevorganges 24 ebenfalls konstant.

In der Praxis schließt sich innerhalb eines der oben beschriebenen Haltevorgänge 24 vor Erreichen der unteren Grenzspannung 30 der Entladevorgang 26 an. Durch die Rückübertragung von elektrischen Ladungsträgern vom piezoelektrischen Element zur Lade- und Entladeeinheit 62 wird die elastische Auslenkung des piezoelektrischen Elementes 10 aufgehoben. Der Raildruck der Rail-Kammer 50 wirkt auf das Ventilelement 60. Der die Auslenkung des Ventilelementes 60 erzeugende Druck des hydraulischen Kopplers 28, ausgehend vom piezoelektrischen Element 10 über die Kolben 36 und 38, wird aufgehoben. Das Ventilelement 60 verlässt den zweiten Sitz 58 und verschließt den Rücklauf 40 und wird entsprechend in den ersten Sitz 56 zurückverlagert. Durch den wiederhergestellten Raildruck der Rail-Kammer 50 im Innern des Steuerventiles 32 und des Steuerraumes 64 wird das Stellglied 18, insbesondere die Düsennadel 34, wieder vollständig geschlossen. Die Einspritzmenge 70 geht, wie Figur 3 anhand der Kennlinie darstellt, auf den Wert Null zurück.

Bei den bisherigen Erläuterungen wurde davon ausgegangen, dass die Kompensation (Nachladen) bei Erreichen der Grenzspannung 30 erfolgt. Es ist jedoch auch im Sinne der Erfindung, wenn die Kompensation zu einem vorgebbaren Zeitpunkt unabhängig von der Ist-Spannung am piezoelektrischen Element 10 einsetzt. Beispielsweise kann die Kompensation nach Ablauf einer vorgebbaren Zeitspanne nach Beginn des Haltevorgangs 24 eingeleitet werden. Denkbar ist auch, die Kompensation in vorgebbaren Zeitintervallen selbsttätig innerhalb des Haltevorgangs zu wiederholen.

## Patentansprüche

1. Verfahren zum Laden oder Entladen eines piezoelektrischen Elementes (10), wobei elektrische Ladungsträger von einer Gleichspannungsquelle (16) zum piezoelektrischen Element (10) oder umgekehrt transportiert werden, wobei eine elastische Auslenkung des piezoelektrischen Elementes (10) über einen hydraulischen Koppler (28) auf ein Stellglied (18) übertragen wird wobei eine Stellbewegung des Stellgliedes (18) in Abhängigkeit von der Höhe einer am piezoelektrischen Element (10) anliegenden Spannung verändert wird, **dadurch gekennzeichnet, dass** in einer Haltephase des piezoelektrischen Elementes (10) eine Verringerung Drucks in dem Koppler durch mindestens eine zusätzliche Übertragung von elektrischen Ladungsträgern kompensiert wird.

2. Verfahren nach Anspruch 1, **dadurch gekennzeichnet, dass** die Ladungsträger von der Gleichspannungsquelle (16) zu dem piezoelektrischen Element (10) innerhalb eines Ansteuerzyklus (20) übertragen werden.

3. Verfahren nach einem der vorhergehenden Ansprüche, **dadurch gekennzeichnet, dass** der Ansteuerzyklus (20) aus einem Ladevorgang (22), einem nachfolgenden Haltevorgang (24) und einem Entladevorgang (26) gebildet wird.

4. Verfahren nach einem der vorhergehenden Ansprüche, **dadurch gekennzeichnet, dass** die Kompensation nach Erreichen einer unteren Grenzspannung (30) der am piezoelektrischen Element (10) anliegenden Spannung erfolgt.

5. Verfahren nach einem der vorhergehenden Ansprüche, **dadurch gekennzeichnet, dass** die Kompensation des Spannungsrückganges mehrmals in Abhängigkeit der Verringerung der Höhe der Soll-Gleichspannung (68) des piezoelektrischen Elementes (10) innerhalb des Haltevorganges (24) wiederholt wird.

6. Verfahren nach einem der vorhergehenden Ansprüche, **dadurch gekennzeichnet, dass** die Höhe der Spannung am piezoelektrischen Element (10) nach der Kompensation größer als die anfängliche Soll-Gleichspannung (68) gewählt wird.

7. Verfahren nach einem der Ansprüche 1 bis 5, **dadurch gekennzeichnet, dass** die Kompensation zeitabhängig eingeleitet wird.

8. Verfahren nach Anspruch 7, **dadurch gekennzeichnet, dass** die Kompensation nach Ablauf einer vorgebbaren Zeitspanne nach Beginn des Haltevorgangs (24) eingeleitet wird.

9. Verfahren nach Anspruch 7, **dadurch gekennzeichnet, dass** die Kompensation in vorgebbaren Zeitintervallen selbsttätig innerhalb des Haltevorgangs (24) eingeleitet wird.

## Claims

1. Method for charging and discharging a piezoelectric element (10), with electrical charge carriers being transported from a DC voltage source (16) to the piezoelectric element (10) or vice versa, with an elastic deflection of the piezoelectric element (10) being transmitted to an actuator (18) by means of a hydraulic coupler (28), with an actuating movement of the actuator (18) being varied as a function of the level of a voltage present across the piezoelectric element (10), **characterized in that** a reduction in the pressure in the coupler is compensated for by at least one additional transmission of electrical charge carriers in a holding phase of the piezoelectric element (10).

2. Method according to Claim 1, **characterized in that** the charge carriers are transmitted from the DC voltage source (16) to the piezoelectric element (10) within an actuation cycle (20).

3. Method according to either of the preceding claims, **characterized in that** the actuation cycle (20) is formed from a charging operation (22), a subsequent holding operation (24) and a discharging operation (26).

4. Method according to one of the preceding claims, **characterized in that** the compensation is performed after a lower limit voltage (30) of the voltage present across the piezoelectric element (10) is reached.

5. Method according to one of the preceding claims, **characterized in that** the compensation of the drop in voltage is repeated several times as a function of the reduction in the level of the setpoint DC voltage (68) of the piezoelectric element (10) within the holding operation (24).

6. Method according to one of the preceding claims, **characterized in that** the level of the voltage across the piezoelectric element (10) after the compensation is selected to be greater than the initial setpoint DC voltage (68).

7. Method according to one of Claims 1 to 5, **characterized in that** the compensation is initiated as a function of time.

8. Method according to Claim 7, **characterized in that** the compensation is initiated after a prespecified time period elapses following the beginning of the holding operation (24).

9. Method according to Claim 7, **characterized in that** the compensation is automatically initiated within the holding operation (24) at prespecified time intervals.

## Revendications

1. Procédé de charge ou de décharge d'un élément piézo-électrique (10) selon lequel
on transporte des porteurs de charge électriques à partir d'une source de tension continue (16) vers l'élément piézo-électrique (10) ou inversement,
on transmet un débattement élastique de l'élément piézo-électrique (10) par un coupleur hydraulique (28) à un organe d'actionnement (18) et ce mouvement d'actionnement de l'organe d'actionnement (18) est modifié en fonction de l'amplitude de la tension appliquée à l'élément piézo-électrique (10),
**caractérisé en ce que**
dans une phase de retenue de l'élément piézo-électrique (10), on compense une diminution de la pression dans le coupleur par au moins une transmission supplémentaire de porteurs de charge électriques.

2. Procédé selon la revendication 1,
**caractérisé en ce qu'**
on transmet les porteurs de charge de la source de tension continue (16) vers l'élément piézo-électrique (10) dans un cycle de commande (20).

3. Procédé selon l'une quelconque des revendications précédentes,
**caractérisé en ce que**
le cycle de commande (20) est formé d'une opération de charge (22), d'une opération de maintien (24) suivante et d'une opération de décharge (26).

4. Procédé selon l'une quelconque des revendications précédentes,
**caractérisé en ce qu'**
on effectue la compensation de la tension appliquée à l'élément piézo-électrique (10) après avoir atteint une tension limite inférieure (30).

5. Procédé selon l'une quelconque des revendications précédentes,
**caractérisé en ce qu'**
on répète la compensation de la diminution de tension, plusieurs fois, en fonction de la diminution de l'amplitude de la tension continue de consigne (68) de l'élément piézo-électrique (10) dans une opération de maintien (24).

6. Procédé selon l'une quelconque des revendications précédentes,
**caractérisé en ce qu'**
après la compensation, on choisit le niveau de tension de l'élément piézo-électrique (10) plus grand que la tension continue de consigne initiale (68).

7. Procédé selon l'une quelconque des revendications 1 à 5,
**caractérisé en ce qu'**
on effectue la compensation en fonction du temps.

8. Procédé selon la revendication 7,
**caractérisé en ce qu'**
on lance la compensation à la fin d'une période prédéfinie après le début de l'opération de maintien (24).

9. Procédé selon la revendication 7,
**caractérisé en ce qu'**
on lance la compensation dans des intervalles de temps prédéfinis, automatiquement au cours de l'opération de maintien (24).
